# EUROPEAN PATENT APPLICATION

(11) **EP 3 979 632 A1**
(43) Date of publication of application: **06.04.2022**
(21) Application number: 20200005.5
(22) Date of filing: 05.10.2020
(51) Int. Cl.: H04N 7/18, B60R 1/00, G06T 3/40

(54) **MOTOR VEHICLE ENVIRONMENT DISPLAY SYSTEM AND METHOD**

(71) Applicant: Continental Automotive GmbH, 30165 Hannover (DE)
(72) Inventor: FRIEBE, Markus, 339780 Singapore (SG); SINGH, Rohit, 339780 Singapore (SG); PRABHAKAR, Pavan Nag, 339780 Singapore (SG); SHIGABUTDINOVA, Alina, 339780 Singapore (SG); THAKUR, Mayank, 339780 Singapore (SG)
(74) Representative: Continental Corporation

(57) **Abstract**

A motor vehicle environment display system (100) comprising: a display image constructor (110) configured to construct a display image comprising an image uncapturable region (180) that is uncapturable by at least two image sources (150) at a second time instant after a first time instant; wherein the display image constructor (110) is configured to use at least one portion of a first instant combination image to construct at least one portion of the image uncapturable region (180); and wherein the first instant combination image is configured to be a combination of first instant motor vehicle environment images captured by the at least two image sources (150) at the first time instant before the second time instant.

## Description

### FIELD OF THE INVENTION

The invention relates to a motor vehicle environment display system and a corresponding motor vehicle environment display method.

### BACKGROUND

A motor vehicle may comprise more than one imaging device, such as a camera, to capture images of its surroundings or environment. For instance, the motor vehicle may comprise a front camera directed outwards from a front of the motor vehicle, a rear camera directed outwards from a rear of the motor vehicle, a left camera directed outwards from a left side of the motor vehicle and a right camera directed outwards from a right side of the motor vehicle. The images obtained by such more than one imaging device may be used to assist a driver or a driver assistance system to control the motor vehicle. Hence, it is desirous to provide a system or method of providing information or images of an environment of a motor vehicle.

### SUMMARY

An objective is to provide a motor vehicle environment display system that is able to provide information or images of an environment of a motor vehicle, or a motor vehicle environment display method for providing information or images of an environment of a motor vehicle.

According to a first aspect of the invention, there is provided a motor vehicle environment display system comprising: a display image constructor configured to construct a display image comprising an image uncapturable region that is uncapturable by at least two image sources at a second time instant after a first time instant; wherein the display image constructor is configured to use at least one portion of a first instant combination image to construct at least one portion of the image uncapturable region; and wherein the first instant combination image is configured to be a combination of first instant motor vehicle environment images captured by the at least two image sources at the first time instant before the second time instant.

One advantage of the motor vehicle environment display system is that the motor vehicle environment display system may be able to help a driver or a driver assistance system to visualise an image uncapturable region that is uncapturable by at least two image sources of a motor vehicle at a particular time instant, by using images captured by the at least two image sources at another time instant before the particular time instant to construct an image of the image uncapturable region.

Another advantage is that since images captured by at least two image sources of a motor vehicle are combined into combination images before the display image constructor uses the combination images to construct a display image, less time and processing resources may be required to construct the display image. For instance, if images directly obtained from at least two image sources of a motor vehicle, for example, raw images, are first used to construct image capturable regions and image uncapturable regions before these image capturable regions and these image uncapturable regions are combined into a display image, then image processing operations, such as harmonisation and normalisation, would have to be performed twice, namely when the raw images are used to construct the image capturable regions and the image uncapturable regions and when the image capturable regions and the image uncapturable regions are combined into the display image. However, since the display image constructor is configured to use previously combined images, on which image processing operations may have already been performed, to construct a display image, it may not be necessary to perform image processing operations when the display image constructor constructs the display image using the previously combined images. Furthermore, since the display image constructor may use a combination image to construct a display image, only the combination images may be stored, and thus less memory storage space may be required compared to if the display image constructor were to use raw images to construct the display image, because a combination image may occupy less memory storage space than raw images used to construct the combination image.

Optionally, the display image constructor is configured to construct the display image comprising the image uncapturable region that is uncapturable by the at least two image sources at the second time instant after the first time instant, wherein the image uncapturable region comprises a region below a chassis of a motor vehicle.

Thus, one advantage of the motor vehicle environment display system is that the display image constructor may be able to help a driver or a driver assistance system to visualise a region below a chassis of a motor vehicle that is uncapturable by at least two image sources of a motor vehicle at a particular time instant, by using images captured by the at least two image sources at another time instant before the particular time instant to construct an image of the region below the chassis of the motor vehicle.

Optionally, the display image constructor is configured to construct the display image further comprising an image capturable region that is capturable by the at least two image sources at the second time instant.

Thus, one advantage of the motor vehicle environment display system is that the display image constructor may be able to use images captured by at least two image sources at a later time instant of two different time instants (more current images) to construct an image capturable region.

Optionally, the display image constructor is configured to use at least one portion of a second instant combination image to construct at least one portion of the image capturable region; and the second instant combination image is configured to be a combination of second instant motor vehicle environment images captured by the at least two image sources at the second time instant after the first time instant.

Thus, one advantage of the motor vehicle environment display system is that the display image constructor may be able to help a driver or a driver assistance system to obtain a display image comprising both an image capturable region and an image uncapturable region.

The motor vehicle environment display system may further comprise an uncapturable region matcher configured to match each zone of the at least one portion of the first instant combination image to a respective zone of the at least one portion of the image uncapturable region based on vehicular data.

Thus, one advantage of the motor vehicle environment display system is that the uncapturable region matcher may be able to help the display image constructor to accurately construct an image uncapturable region based on vehicular data.

Optionally, the uncapturable region matcher is configured to match each zone of the at least one portion of the first instant combination image to a respective zone of the at least one portion of the image uncapturable region based on vehicular pose data.

Thus, one advantage of the motor vehicle environment display system is that the uncapturable region matcher may be able to help the display image constructor to accurately construct an image uncapturable region based on vehicular pose data.

The motor vehicle environment display system may further comprise a memory storage device configured to store the first instant combination image, the second instant combination image or both the first instant combination image and the second instant combination image.

Thus, one advantage of the motor vehicle environment display system is that less memory storage space may be required to store combination images in the memory storage device compared to if the memory storage device were configured to store raw images, because a combination image may occupy less memory storage space than raw images used to construct the combination image.

A motor vehicle may comprise the motor vehicle environment display system.

Any feature or step disclosed in the context of the first aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the first aspect of the invention, and in the inventions generally.

According to a second aspect of the invention, there is provided a motor vehicle environment display system comprising: a display image constructor configured to construct a display image comprising an image uncapturable region that is uncapturable by at least two image sources at a second time instant after a first time instant; wherein the display image constructor is configured to use at least one portion of a first instant combination image to construct at least one portion of the image uncapturable region; wherein the first instant combination image is configured to be a combination of first instant motor vehicle environment images captured by the at least two image sources at the first time instant before the second time instant; wherein the display image constructor is configured to construct the display image comprising the image uncapturable region that is uncapturable by the at least two image sources at the second time instant after the first time instant, wherein the image uncapturable region comprises a region below a chassis of a motor vehicle; wherein the display image constructor is configured to construct the display image further comprising an image capturable region that is capturable by the at least two image sources at the second time instant; wherein: the display image constructor is configured to use at least one portion of a second instant combination image to construct at least one portion of the image capturable region; and the second instant combination image is configured to be a combination of second instant motor vehicle environment images captured by the at least two image sources at the second time instant after the first time instant; an uncapturable region matcher configured to match each zone of the at least one portion of the first instant combination image to a respective zone of the at least one portion of the image uncapturable region based on vehicular data; wherein the uncapturable region matcher is configured to match each zone of the at least one portion of the first instant combination image to a respective zone of the at least one portion of the image uncapturable region based on vehicular pose data; and a memory storage device configured to store the first instant combination image, the second instant combination image or both the first instant combination image and the second instant combination image.

One advantage of the motor vehicle environment display system is that the motor vehicle environment display system may be able to help a driver or a driver assistance system to visualise an image uncapturable region that is uncapturable by at least two image sources of a motor vehicle at a particular time instant, by using images captured by the at least two image sources at another time instant before the particular time instant to construct an image of the image uncapturable region.

Another advantage is that since images captured by at least two image sources of a motor vehicle are combined into combination images before the display image constructor uses the combination images to construct a display image, less time and processing resources may be required to construct the display image. For instance, if images directly obtained from at least two image sources of a motor vehicle, for example, raw images, are first used to construct image capturable regions and image uncapturable regions before these image capturable regions and these image uncapturable regions are combined into a display image, then image processing operations, such as harmonisation and normalisation, would have to be performed twice, namely when the raw images are used to construct the image capturable regions and the image uncapturable regions and when the image capturable regions and the image uncapturable regions are combined into the display image. However, since the display image constructor is configured to use previously combined images, on which image processing operations may have already been performed, to construct a display image, it may not be necessary to perform image processing operations when the display image constructor constructs the display image using the previously combined images.

Furthermore, since the display image constructor may use a combination image to construct a display image, only the combination images may be stored, and thus less memory storage space may be required compared to if the display image constructor were to use raw images to construct the display image, because a combination image may occupy less memory storage space than raw images used to construct the combination image.

Any feature or step disclosed in the context of the second aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the second aspect of the invention, and in the inventions generally.

According to a third aspect of the invention, there is provided a motor vehicle environment display method comprising the acts of: providing a first instant combination image generated by combining first instant motor vehicle environment images captured by at least two image sources at a first time instant; and constructing a display image comprising an image uncapturable region that is uncapturable by the at least two image sources at a second time instant after the first time instant; wherein the act of constructing the display image comprises that act of constructing at least one portion of the image uncapturable region with at least one portion of the first instant combination image.

One advantage of the motor vehicle environment display method is that the motor vehicle environment display method may be able to allow an image uncapturable region that is uncapturable by at least two image sources of a motor vehicle at a particular time instant to be visualised, by using images captured by the at least two image sources at another time instant before the particular time instant to construct an image of the image uncapturable region.

Another advantage is that since images captured by at least two image sources of a motor vehicle are combined into combination images before the combination images are provided, less time and processing resources may be required to construct a display image. For instance, if images directly obtained from at least two image sources of a motor vehicle, for example, raw images, are first used to construct image capturable regions and image uncapturable regions before these image capturable regions and these image uncapturable regions are combined into a display image, then image processing operations, such as harmonisation and normalisation, would have to be performed twice, namely when the raw images are used to construct the image capturable regions and the image uncapturable regions and when the image capturable regions and the image uncapturable regions are combined into the display image. However, since previously combined images, on which image processing operations may have already been performed, are provided to construct a display image, it may not be necessary to perform image processing operations when the display image is constructed using the previously combined images.

Furthermore, since a combination image may be used to construct a display image, only the combination images may be stored, and thus less memory storage space may be required compared to if raw images were to be used to construct the display image, because a combination image may occupy less memory storage space than raw images used to construct the combination image.

Optionally, the act of constructing the display image comprises the act of constructing the display image comprising the image uncapturable region that is uncapturable by the at least two image sources at the second time instant, wherein the image uncapturable region comprises a region below a chassis of a motor vehicle.

Thus, one advantage of the motor vehicle environment display method is that the motor vehicle environment display method may be able to allow a region below a chassis of a motor vehicle that is uncapturable by at least two image sources of a motor vehicle at a particular time instant to be visualised, by using images captured by the at least two image sources at another time instant before the particular time instant to construct an image of the region below the chassis of the motor vehicle.

Optionally, the act of constructing the display image comprises the act of constructing the display image comprising an image capturable region that is capturable by the at least two image sources at the second time instant.

Thus, one advantage of the motor vehicle environment display method is that images captured by at least two image sources at a later time instant of two different time instants (more current images) may be used to construct an image capturable region.

The motor vehicle environment display method may further comprise the act of providing a second instant combination image generated by combining second instant motor vehicle environment images captured by the at least two image sources at the second time instant after the first time instant.

Thus, one advantage of the motor vehicle environment display method is that the motor vehicle environment display method may be able to allow a display image comprising both an image capturable region and an image uncapturable region to be obtained.

Optionally, the act of constructing the display image comprises the act of constructing the image capturable region with at least one portion of the second instant combination image.

Thus, one advantage of the motor vehicle environment display method is that the motor vehicle environment display method may be able to allow a display image comprising both an image capturable region and an image uncapturable region to be obtained.

The motor vehicle environment display method may further comprise the act of matching each zone of the at least one portion of the first instant combination image to a respective zone of the at least one portion of the image uncapturable region based on vehicular data.

Thus, one advantage of the motor vehicle environment display method is that the motor vehicle environment display method may be able to allow an image uncapturable region to be accurately constructed based on vehicular data.

Optionally, the act of matching each zone of the at least one portion of the first instant combination image to a respective zone of the at least one portion of the image uncapturable region based on the vehicular data comprises the act of matching each zone of the at least one portion of the first instant combination image to a respective zone of the at least one portion of the image uncapturable region based on vehicular pose data.

Thus, one advantage of the motor vehicle environment display method is that the motor vehicle environment display method may be able to allow an image uncapturable region to be accurately constructed based on vehicular pose data.

The motor vehicle environment display method may further comprise the act of storing the first instant combination image in a memory storage device.

Thus, one advantage of the motor vehicle environment display method is that the motor vehicle environment display method may be able to allow less memory storage space to be used compared to if raw images were to be stored, because a combination image may occupy less memory storage space than raw images used to construct the combination image.

The motor vehicle environment display method may further comprise the act of storing the second instant combination image in the memory storage device.

Thus, one advantage of the motor vehicle environment display method is that the motor vehicle environment display method may be able to allow less memory storage space to be used compared to if raw images were to be stored, because a combination image may occupy less memory storage space than raw images used to construct the combination image.

Any feature or step disclosed in the context of the third aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the third aspect of the invention, and in the inventions generally.

According to a fourth aspect of the invention, there is provided a motor vehicle environment display method comprising the acts of: providing a first instant combination image generated by combining first instant motor vehicle environment images captured by at least two image sources at a first time instant; and constructing a display image comprising an image uncapturable region that is uncapturable by the at least two image sources at a second time instant after the first time instant; wherein the act of constructing the display image comprises that act of constructing at least one portion of the image uncapturable region with at least one portion of the first instant combination image; wherein the act of constructing the display image comprises the act of constructing the display image comprising the image uncapturable region that is uncapturable by the at least two image sources at the second time instant, wherein the image uncapturable region comprises a region below a chassis of a motor vehicle; wherein the act of constructing the display image comprises the act of constructing the display image comprising an image capturable region that is capturable by the at least two image sources at the second time instant; providing a second instant combination image generated by combining second instant motor vehicle environment images captured by the at least two image sources at the second time instant after the first time instant; wherein the act of constructing the display image comprises the act of constructing the image capturable region with at least one portion of the second instant combination image; matching each zone of the at least one portion of the first instant combination image to a respective zone of the at least one portion of the image uncapturable region based on vehicular data; wherein the act of matching each zone of the at least one portion of the first instant combination image to a respective zone of the at least one portion of the image uncapturable region based on the vehicular data comprises the act of matching each zone of the at least one portion of the first instant combination image to a respective zone of the at least one portion of the image uncapturable region based on vehicular pose data; storing the first instant combination image in a memory storage device; and storing the second instant combination image in the memory storage device.

One advantage of the motor vehicle environment display method is that the motor vehicle environment display method may be able to allow an image uncapturable region that is uncapturable by at least two image sources of a motor vehicle at a particular time instant to be visualised, by using images captured by the at least two image sources at another time instant before the particular time instant to construct an image of the image uncapturable region.

Another advantage is that since images captured by at least two image sources of a motor vehicle are combined into combination images before the combination images are provided, less time and processing resources may be required to construct a display image. For instance, if images directly obtained from at least two image sources of a motor vehicle, for example, raw images, are first used to construct image capturable regions and image uncapturable regions before these image capturable regions and these image uncapturable regions are combined into a display image, then image processing operations, such as harmonisation and normalisation, would have to be performed twice, namely when the raw images are used to construct the image capturable regions and the image uncapturable regions and when the image capturable regions and the image uncapturable regions are combined into the display image. However, since previously combined images, on which image processing operations may have already been performed, are provided to construct a display image, it may not be necessary to perform image processing operations when the display image is constructed using the previously combined images.

Furthermore, since a combination image may be used to construct a display image, only the combination images may be stored, and thus less memory storage space may be required compared to if raw images were to be used to construct the display image, because a combination image may occupy less memory storage space than raw images used to construct the combination image.

Any feature or step disclosed in the context of the fourth aspect of the invention may also be used, to the extent possible, in combination with and/or in the context of other aspects of the invention, and in the inventions generally. In addition, any feature or step disclosed in the context of any other aspect of the invention may also be used, to the extent possible, in combination with and/or in the context of the fourth aspect of the invention, and in the inventions generally.

In this summary, in the description below, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

In this summary, in the description below, in the claims below, and in the accompanying drawings, where reference is made herein to a method comprising two or more defined steps, the defined steps can be carried out in any order or simultaneously (except where the context excludes that possibility), and the method can include one or more other steps which are carried out before any of the defined steps, between two of the defined steps, or after all the defined steps (except where the context excludes that possibility).

As used in this summary, in the description below, in the claims below, and in the accompanying drawings, the term "comprises" and grammatical equivalents thereof are used herein to mean that other components, ingredients, steps, et cetera are optionally present. For example, an article "comprising" (or "which comprises") components A, B, and C can consist of (that is, contain only) components A, B, and C, or can contain not only components A B, and C but also one or more other components.

As used in this summary, in the description below, in the claims below, and in the accompanying drawings, the term "at least" followed by a number is used in to denote the start of a range beginning with that number (which may be a range having an upper limit or no upper limit, depending on the variable being defined) . For example, "at least 1" means 1 or more than 1. The term "at most" followed by a number is used herein to denote the end of a range ending with that number (which may be a range having 1 or 0 as its lower limit, or a range having no lower limit, depending on the variable being defined) . For example, "at most 4" means 4 or less than 4, and "at most 40%" means 40% or less than 40%. When, in this specification, a range is given as "(a first number) to (a second number)" or "(a first number) - (a second number) ", this means a range whose lower limit is the first number and whose upper limit is the second number. For example, 25 to 100 mm means a range whose lower limit is 25 mm, and whose upper limit is 100 mm.

As used in the summary above, in this description, in the claims below, and in the accompanying drawings, the term "pose" means a particular position and orientation adopted by a motor vehicle. A position may be defined using the commonly used mathematical notations of x axis, y axis and z axis, and an orientation may be expressed in terms of yaw angle, pitch angle and roll angle.

As used in this summary, in the description below, in the claims below, and in the accompanying drawings, the term "volatile memory" means any type of computer memory where the contents of the memory are lost if there is no power to the computer. Random-access memory (RAM) is an example of a type of volatile memory. As used in the summary above, in this description, in the claims below, and in the accompanying drawings, the term "nonvolatile memory" or the term "non-transitory computer-readable medium" means any type of computer memory where the contents of the memory are retained even if there is no power to the computer. Hard disk and solid-state drive (SSD) are examples of types of nonvolatile memory or non-transitory computer-readable medium.

### BRIEF DESCRIPTION OF THE DRAWINGS

These and other features, aspects, and advantages will become better understood with regard to the following description, appended claims, and accompanying drawings where:
Figure 1 shows a motor vehicle environment display system;
Figure 2 shows a motor vehicle comprising the motor vehicle environment display system of Figure 1 and a chassis;
Figure 3A shows a schematic top view of the chassis of the motor vehicle of Figure 2 and an associated image capturable region and an associated image uncapturable region at a first time instant;
Figure 3B shows a schematic top view of the image capturable region and the image uncapturable region at the first time instant;
Figure 4A shows a schematic top view of the chassis of the motor vehicle of Figure 2 and an associated image capturable region and an associated image uncapturable region at a second time instant after the first time instant;
Figure 4B shows a schematic top view of the image capturable region and the image uncapturable region at the second time instant after the first time instant; and
Figure 5 shows a diagram for a motor vehicle environment display method.

In the drawings, like parts are denoted by like reference numerals.

### DESCRIPTION

In the summary above, in this description, in the claims below, and in the accompanying drawings, reference is made to particular features (including method steps) of the invention. It is to be understood that the disclosure of the invention in this specification includes all possible combinations of such particular features. For example, where a particular feature is disclosed in the context of a particular aspect or embodiment of the invention, or a particular claim, that feature can also be used, to the extent possible, in combination with and/or in the context of other particular aspects and embodiments of the invention, and in the inventions generally.

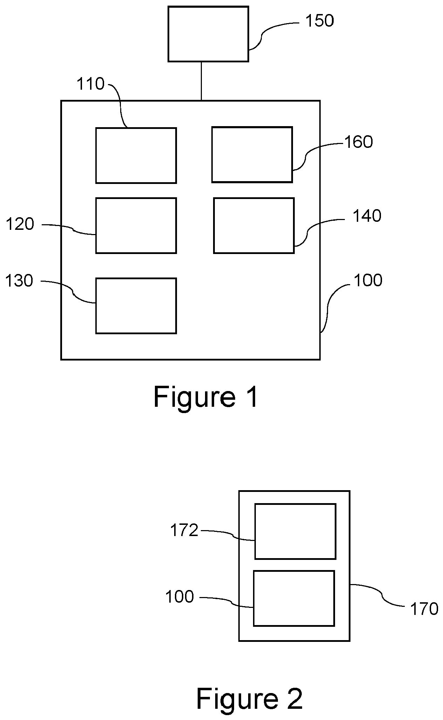

Figure 1 shows a motor vehicle environment display system 100 comprising a display image constructor 110 and an uncapturable image matcher 120. The motor vehicle environment display system 100 may further comprise a display 140, an image combiner 160 and a memory storage device 130. The motor vehicle environment display system 100 may comprise software, hardware or a combination of software and hardware.

Figure 2 shows a motor vehicle 170 comprising the motor vehicle environment display system 100 and a chassis 172. The motor vehicle 170 may be a car.

The motor vehicle environment display system 100 may be operationally connected to image sources 150, in order to obtain images from the image sources 150. The image sources 150 may be cameras comprised in, for example, a surround view system, of the motor vehicle 170. The motor vehicle 170 may comprise more than one image source 150. For example, the motor vehicle 170 may comprise four image sources 150. For instance, the motor vehicle 170 may comprise a front camera directed outwards from a front of the chassis 172, a rear camera directed outwards from a rear of the chassis 172, a left camera directed outwards from a left side of the chassis 172 and a right camera directed outwards from a right side of the chassis 172. In fact, the image sources 150 may not be comprised in the motor vehicle itself, for example, V2X image stream sources or image stream sources 150 comprised in a trailer. The image sources 150 may be configured to capture motor vehicle environment images of the motor vehicle's 170 surroundings or environment.

The image combiner 160 is configured to combine images, such as raw images, into a combination image, which is an image generated by combining or stitching together images or portions of images. The image sources 150 may provide the image combiner 160 with images, such as raw images, and the image combiner 160 is configured to combine the images captured by the image sources 150 at a particular time instant into a combination image. A raw image captured by an image source 150 comprising a wide angle lens may comprise a fisheye image providing a curved or distorted view. Hence, the image combiner 160 may be configured to perform image processing operations on a raw image comprising a fisheye image such that a curved or distorted view is converted into a normal or flat view. A combination image may, for example, be a surround view image. The image combiner 160 may comprise software, hardware or a combination of software and hardware.

The display image constructor 110 is configured to construct a display image that may be displayed on the display 140. The display image may comprise an image uncapturable region 180 that is uncapturable by the image sources 150 at a particular time instant, and an image capturable region 182 that is capturable by the image sources 150 at the particular time instant. An image uncapturable region 180 may comprise a region below the chassis 172 of the motor vehicle 170.

The display image constructor 110 is configured to use at least one portion of a first instant combination image generated by combining first instant motor vehicle environment images captured by the image sources 150 at a first time instant to construct at least one portion of an image uncapturable region 180, wherein the image uncapturable region 180 is uncapturable by the image sources 150 at a second time instant after the first time instant. The display image constructor 110 is also configured to use at least one portion of a second instant combination image generated by combining second instant motor vehicle environment images captured by the image sources 150 at the second time instant after the first time instant to construct at least one portion of an image capturable region 182. The display image constructor 110 may comprise software, hardware or a combination of software and hardware.

The uncapturable image matcher 120 is configured to match each zone of at least one portion of a first instant combination image generated by combining first instant motor vehicle environment images captured by the image sources 150 at a first time instant to a respective zone of at least one portion of an image uncapturable region 180 at a second time instant after the first time instant based on vehicular data.

Vehicular data may comprise vehicular pose data, vehicular localisation data or vehicular dynamics data. Vehicular dynamics data may comprise data about the motor vehicle 170, such as at least one of a steer angle, a wheel rotation speed, the motor vehicle's 170 speed, the motor vehicle's 170 acceleration (linear or lateral), the motor vehicle's 170 rotation rate on its longitudinal axis, transverse axis or yaw axis, a chassis height, an indicator, an engine, a suspension system, or a transmission system. Vehicular pose data may comprise data about the motor vehicle 170, such as at least one of the motor vehicle's 170 position or the motor vehicle's 170 orientation. Vehicular localisation data may comprise data about the motor vehicle 170, such as location and time information retrieved from a satellite navigation system, for example, a global positioning system (GPS) based satellite navigation system. Vehicular localisation data may also comprise direction information retrieved from a compass.

Hence, the uncapturable image matcher 120 may be configured to match each zone of at least one portion of a first instant combination image generated by combining first instant motor vehicle environment images captured by the image sources 150 at a first time instant to a respective zone of at least one portion of an image uncapturable region 180 at a second time instant after the first time instant based on at least one of vehicular pose data, vehicular localisation data or vehicular dynamics data. The uncapturable image matcher 120 may comprise software, hardware or a combination of software and hardware.

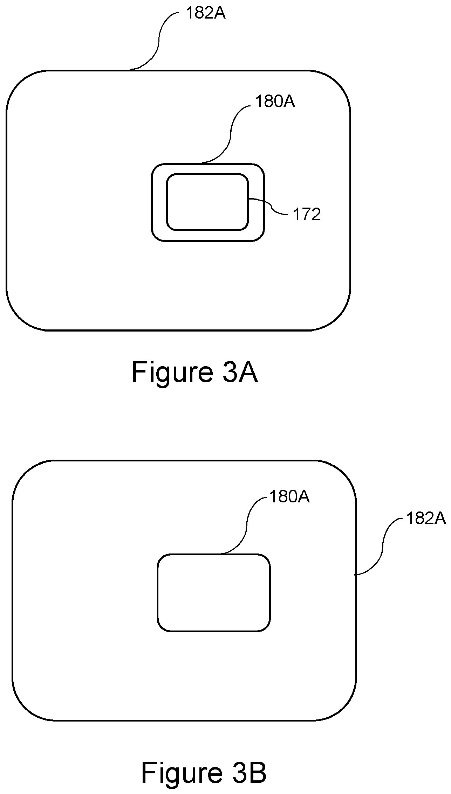

Figure 3A shows a schematic top view of the chassis 172 of the motor vehicle 170 and an associated image capturable region 182A and an associated image uncapturable region 180A at a first time instant. Figure 3B shows a schematic top view of the image capturable region 182A and the image uncapturable region 180A at the first time instant.

Hence, for instance, the image sources 150 of the motor vehicle 170 capture first instant motor vehicle environment images of the motor vehicle's 170 surroundings or environment at a first time instant, and the image combiner 160 combines the first instant motor vehicle environment images into a first instant combination image. Then, the display image constructor 110 constructs at least one portion of the image capturable region 182A at the first time instant by using at least one portion of the first instant combination image.

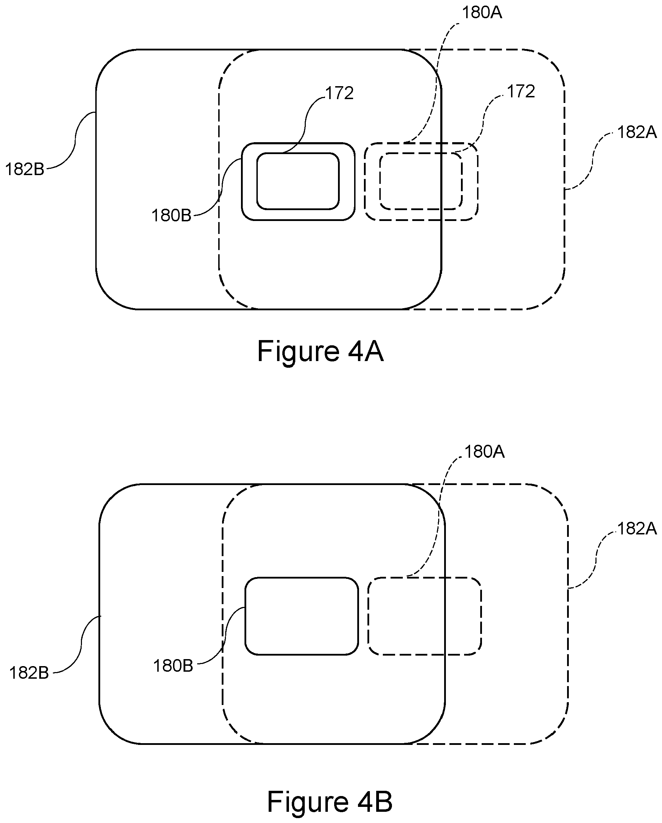

Figure 4A shows a schematic top view of the chassis 172 of the motor vehicle 170 and an associated image capturable region 182B and an associated image uncapturable region 180B at a second time instant after the first time instant. Figure 4B shows a schematic top view of the image capturable region 182B and the image uncapturable region 180B at the second time instant after the first time instant.

Thus, for example, the motor vehicle 170 subsequently moves and arrives at a new position at the second time instant after the first time instant. The image sources 150 of the motor vehicle 170 capture second instant motor vehicle environment images of the motor vehicle's 170 surroundings or environment at the second time instant, and the image combiner 160 combines the second instant motor vehicle environment images into a second instant combination image. Then, the display image constructor 110 constructs at least one portion of the image capturable region 182B at the second time instant by using at least one portion of the second instant combination image. Next, the uncapturable image matcher 120 matches each zone of at least one portion of the first instant combination image to a respective zone of at least one portion of the image uncapturable region 180B at the second time instant after the first time instant based on vehicular data. Thereafter, the display image constructor 110 constructs at least one portion of the image uncapturable region 180B at the second time instant by using at least one portion of the first instant combination image. Finally, the display image constructor 110 constructs a display image comprising the image uncapturable region 180B at the second time instant constructed by using the at least one portion of the first instant combination image, and the image capturable region 182B at the second time instant.

The memory storage device 130 is configured to store combination images. The memory storage device 130 may be configured to store display images. The memory storage device may be a hard disk. The memory storage device 130 may comprise software, hardware or a combination of software and hardware.

The display 140 is configured to display display images constructed by the display image constructor 110. The display 140 may, for example, be a human user interface comprised in a dashboard of the motor vehicle 170. The display 140 may comprise software, hardware or a combination of software and hardware.

One advantage of the motor vehicle environment display system 100 is that the motor vehicle environment display system 100 may be able to help a driver or a driver assistance system to visualise an image uncapturable region 180 that is uncapturable by the at least two image sources 150 of the motor vehicle 170 at a particular time instant, by using images captured by the at least two image sources 150 at another time instant before the particular time instant to construct an image of the image uncapturable region 180.

Another advantage is that since images captured by the at least two image sources 150 of the motor vehicle 170 are combined into combination images before the display image constructor 110 uses the combination images to construct a display image, less time and processing resources may be required to construct the display image. For instance, if images directly obtained from at least two image sources of a motor vehicle, for example, raw images, are first used to construct image capturable regions 182 and image uncapturable regions 180 before these image capturable regions 182 and these image uncapturable regions 180 are combined into a display image, then image processing operations, such as harmonisation and normalisation, would have to be performed twice, namely when the raw images are used to construct the image capturable regions 182 and the image uncapturable regions 180 and when the image capturable regions 182 and the image uncapturable regions 180 are combined into the display image. However, since the display image constructor 110 is configured to use previously combined images, on which image processing operations may have already been performed, to construct a display image, it may not be necessary to perform image processing operations when the display image constructor 110 constructs the display image using the previously combined images.

Furthermore, since the display image constructor 110 may use a combination image to construct a display image, only the combination images may be stored, and thus less memory storage space may be required compared to if the display image constructor 110 were to use raw images to construct the display image, because a combination image may occupy less memory storage space than raw images used to construct the combination image.

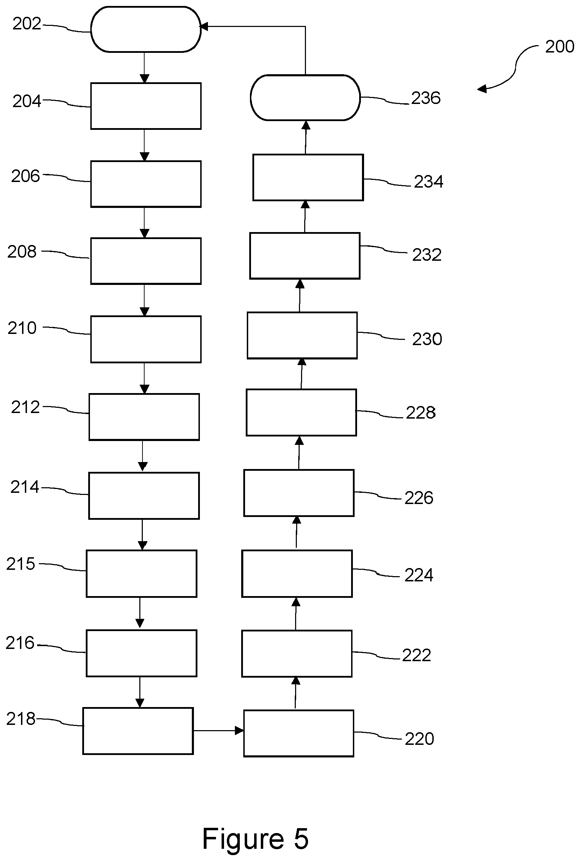

Figure 5 shows a diagram for a motor vehicle environment display method 200 using the motor vehicle environment display system 100.

At step 202, the motor vehicle environment display method 200 initialises. At step 204, the image sources 150 capture first instant motor vehicle environment images of the motor vehicle's 170 surroundings or environment at a first time instant. At step 206, the image combiner 160 combines the first instant motor vehicle environment images into a first instant combination image. At step 208, the first instant combination image is stored in the memory storage device 130. At step 210, the display image constructor 110 uses at least one portion of the first instant combination image to construct at least one portion of an image capturable region 182A at the first time instant. At step 212, the display image constructor 110 constructs a display image at the first time instant comprising the image capturable region 182A and an image uncapturable region 180A at the first time instant. At step 214, the display image at the first time instant is stored in the memory storage device 130. At step 215, the display image at the first time instant is displayed on the display 140.

At step 216, the motor vehicle 170 moves and arrives at another position at a second time instant after the first time instant. At step 218, the image sources 150 capture second instant motor vehicle environment images of the motor vehicle's 170 surroundings or environment at the second time instant. At step 220, the image combiner 160 combines the second instant motor vehicle environment images into a second instant combination image. At step 222, the second instant combination image is stored in the memory storage device 130. At step 224, the display image constructor 110 uses at least one portion of the second instant combination image to construct at least one portion of an image capturable region 182B at the second time instant. At step 226, the uncapturable image matcher 120 matches each zone of at least one portion of the first instant combination image to a respective zone of at least one portion of an image uncapturable region 180B at the second time instant after the first time instant based on vehicular data. At step 228, the display image constructor 110 uses at least one portion of the first instant combination image to construct at least one portion of the image uncapturable region 180B at the second time instant. At step 230, the display image constructor 110 constructs a display image at the second time instant comprising the image capturable region 182B and the image uncapturable region 180B at the second time instant. At step 232, the display image at the second time instant is stored in the memory storage device 130. At step 234, the display image at the second time instant is displayed on the display 140.

Finally, at step 236, the motor vehicle environment display method 200 ends. However, it is to be understood that the motor vehicle environment display method 200 illustrated in a sequential plurality of steps in Figure 5 merely illustrates the motor vehicle environment display method 200 as applied to images captured at two particular time instances. Hence, step 236 may loop back to step 202 to perform the motor vehicle environment display method 200 again.

One advantage of the motor vehicle environment display method 200 is that the motor vehicle environment display method 200 may be able to allow an image uncapturable region 180 that is uncapturable by the at least two image sources 150 of the motor vehicle 170 at a particular time instant to be visualised, by using images captured by the at least two image sources 150 at another time instant before the particular time instant to construct an image of the image uncapturable region 180.

Another advantage is that since images captured by the at least two image sources 150 of the motor vehicle 170 are combined into combination images before the combination images are provided, less time and processing resources may be required to construct a display image. For instance, if images directly obtained from at least two image sources of a motor vehicle, for example, raw images, are first used to construct image capturable regions 182 and image uncapturable regions 180 before these image capturable regions 182 and these image uncapturable regions 180 are combined into a display image, then image processing operations, such as harmonisation and normalisation, would have to be performed twice, namely when the raw images are used to construct the image capturable regions 182 and the image uncapturable regions 180 and when the image capturable regions 182 and the image uncapturable regions 180 are combined into the display image. However, since previously combined images, on which image processing operations may have already been performed, are provided to construct a display image, it may not be necessary to perform image processing operations when the display image is constructed using the previously combined images.

Furthermore, since a combination image may be used to construct a display image, only the combination images may be stored, and thus less memory storage space may be required compared to if raw images were to be used to construct the display image, because a combination image may occupy less memory storage space than raw images used to construct the combination image.

Although the invention has been described in considerable detail with reference to certain embodiments or aspects, other embodiments or aspects are possible.

For example, the step of storing the display image at the first time instant of step 214 and the step of storing the display image at the second time instant of step 232 are optional and may be omitted.

Therefore, the spirit and scope of the appended claims should not be limited to the description of the embodiments contained herein.

All features disclosed in this specification (including the appended claims, abstract, and accompanying drawings) may be replaced by alternative features serving the same, equivalent, or similar purpose, unless expressly stated otherwise. Thus, unless expressly stated otherwise, each feature disclosed is one example only of a generic series of equivalent or similar features.

## Claims

1. A motor vehicle environment display system (100) comprising:
a display image constructor (110) configured to construct a display image comprising an image uncapturable region (180) that is uncapturable by at least two image sources (150) at a second time instant after a first time instant;
wherein the display image constructor (110) is configured to use at least one portion of a first instant combination image to construct at least one portion of the image uncapturable region (180); and
wherein the first instant combination image is configured to be a combination of first instant motor vehicle environment images captured by the at least two image sources (150) at the first time instant before the second time instant.

2. The motor vehicle environment display system (100) as in claim 1, wherein the display image constructor (110) is configured to construct the display image comprising the image uncapturable region (180) that is uncapturable by the at least two image sources (150) at the second time instant after the first time instant, wherein the image uncapturable region (180) comprises a region below a chassis (172) of a motor vehicle (170) .

3. The motor vehicle environment display system (100) as in any one of the preceding claims, wherein the display image constructor (110) is configured to construct the display image further comprising an image capturable region (182) that is capturable by the at least two image sources (150) at the second time instant.

4. The motor vehicle environment display system (100) as in claim 3, wherein:
the display image constructor (110) is configured to use at least one portion of a second instant combination image to construct at least one portion of the image capturable region (182); and
the second instant combination image is configured to be a combination of second instant motor vehicle environment images captured by the at least two image sources (150) at the second time instant after the first time instant.

5. The motor vehicle environment display system (100) as in any one of the preceding claims, further comprising an uncapturable region matcher (120) configured to match each zone of the at least one portion of the first instant combination image to a respective zone of the at least one portion of the image uncapturable region (180) based on vehicular data.

6. The motor vehicle environment display system (100) as in claim 5, wherein the uncapturable region matcher (120) is configured to match each zone of the at least one portion of the first instant combination image to a respective zone of the at least one portion of the image uncapturable region (180) based on vehicular pose data.

7. The motor vehicle environment display system (100) as in any one of the preceding claims, further comprising a memory storage device (130) configured to store the first instant combination image, the second instant combination image or both the first instant combination image and the second instant combination image.

8. A motor vehicle (170) comprising the motor vehicle environment display system (100) as in any one of the preceding claims.

9. A motor vehicle environment display system (100) as in any one of the preceding claims, comprising:
a display image constructor (110) configured to construct a display image comprising an image uncapturable region (180) that is uncapturable by at least two image sources (150) at a second time instant after a first time instant;
wherein the display image constructor (110) is configured to use at least one portion of a first instant combination image to construct at least one portion of the image uncapturable region (180) ;
wherein the first instant combination image is configured to be a combination of first instant motor vehicle environment images captured by the at least two image sources (150) at the first time instant before the second time instant;
wherein the display image constructor (110) is configured to construct the display image comprising the image uncapturable region (180) that is uncapturable by the at least two image sources (150) at the second time instant after the first time instant, wherein the image uncapturable region (180) comprises a region below a chassis (172) of a motor vehicle (170);
wherein the display image constructor (110) is configured to construct the display image further comprising an image capturable region (182) that is capturable by the at least two image sources (150) at the second time instant;
wherein:
the display image constructor (110) is configured to use at least one portion of a second instant combination image to construct at least one portion of the image capturable region (182); and
the second instant combination image is configured to be a combination of second instant motor vehicle environment images captured by the at least two image sources (150) at the second time instant after the first time instant;
an uncapturable region matcher (120) configured to match each zone of the at least one portion of the first instant combination image to a respective zone of the at least one portion of the image uncapturable region (180) based on vehicular data;
wherein the uncapturable region matcher (120) is configured to match each zone of the at least one portion of the first instant combination image to a respective zone of the at least one portion of the image uncapturable region (180) based on vehicular pose data; and
a memory storage device (130) configured to store the first instant combination image, the second instant combination image or both the first instant combination image and the second instant combination image.

10. A motor vehicle environment display method comprising the acts of:
providing a first instant combination image generated by combining first instant motor vehicle environment images captured by at least two image sources (150) at a first time instant; and
constructing a display image comprising an image uncapturable region (180) that is uncapturable by the at least two image sources (150) at a second time instant after the first time instant;
wherein the act of constructing the display image comprises that act of constructing at least one portion of the image uncapturable region (180) with at least one portion of the first instant combination image.

11. The motor vehicle environment display method as in claim 10, wherein the act of constructing the display image comprises the act of constructing the display image comprising the image uncapturable region (180) that is uncapturable by the at least two image sources (150) at the second time instant, wherein the image uncapturable region (180) comprises a region below a chassis (172) of a motor vehicle (170).

12. The motor vehicle environment display method as in any one of claims 10-11, wherein the act of constructing the display image comprises the act of constructing the display image comprising an image capturable region (182) that is capturable by the at least two image sources (150) at the second time instant.

13. The motor vehicle environment display method as in any one of claims 10-12, further comprising the act of providing a second instant combination image generated by combining second instant motor vehicle environment images captured by the at least two image sources (150) at the second time instant after the first time instant.

14. The motor vehicle environment display method as in any one of claims 10-13, further comprising the act of matching each zone of the at least one portion of the first instant combination image to a respective zone of the at least one portion of the image uncapturable region (180) based on vehicular data.

15. A motor vehicle environment display method as in any one of claims 10-14, comprising the acts of:
providing a first instant combination image generated by combining first instant motor vehicle environment images captured by at least two image sources (150) at a first time instant; and
constructing a display image comprising an image uncapturable region (180) that is uncapturable by the at least two image sources (150) at a second time instant after the first time instant;
wherein the act of constructing the display image comprises that act of constructing at least one portion of the image uncapturable region (180) with at least one portion of the first instant combination image;
wherein the act of constructing the display image comprises the act of constructing the display image comprising the image uncapturable region (180) that is uncapturable by the at least two image sources (150) at the second time instant, wherein the image uncapturable region (180) comprises a region below a chassis (172) of a motor vehicle (170);
wherein the act of constructing the display image comprises the act of constructing the display image comprising an image capturable region (182) that is capturable by the at least two image sources (150) at the second time instant;
providing a second instant combination image generated by combining second instant motor vehicle environment images captured by the at least two image sources (150) at the second time instant after the first time instant;
wherein the act of constructing the display image comprises the act of constructing the image capturable region (182) with at least one portion of the second instant combination image;
matching each zone of the at least one portion of the first instant combination image to a respective zone of the at least one portion of the image uncapturable region (180) based on vehicular data;
wherein the act of matching each zone of the at least one portion of the first instant combination image to a respective zone of the at least one portion of the image uncapturable region (180) based on the vehicular data comprises the act of matching each zone of the at least one portion of the first instant combination image to a respective zone of the at least one portion of the image uncapturable region (180) based on vehicular pose data;
storing the first instant combination image in a memory storage device (130); and
storing the second instant combination image in the memory storage device (130).
